# EUROPEAN PATENT APPLICATION

(11) **EP 1 182 852 A1**
(43) Date of publication of application: **27.02.2002**
(21) Application number: 00118417.5
(22) Date of filing: 24.08.2000
(51) Int. Cl.: H04M 1/247, H01H 25/00

(54) **Portable communication apparatus with improved selection device**

(71) Applicant: Sony International (Europe) GmbH, 10785 Berlin (DE)
(72) Inventor: Becker, Johannes, Sony International (Europe) GmbH, Heisenbergbogen 1, 85609 Aschheim (DE)
(74) Representative: Körber, Martin, Dipl.-Phys.

(57) **Abstract**

A portable communication device (1) for a wireless communication system, comprises a display means (4) for displaying information and a scrolling means (2) for scrolling through a menu or other information displayed on the display means (2), said scrolling means (2) being arranged under the display means (4). In an editing mode of said communication device (1) an option shown on the display means (4) is activated upon actuation of the scrolling means (2). According to the present invention, three selectable options (A, B, C) are shown on the display means (4), said options (A, B, C) being allocated to three different portions (6, 7, 8) of the scrolling means (2). The shown options (A, B, C) are activated upon actuation of the middle portion (6), the left and right end portion (7, 8) of the scrolling means (2), respectively.

## Description

The present invention relates to a portable communication device for a wireless communication system with a display means for displaying information and with scrolling means for scrolling through a menu or other information displayed on the display means.

Portable communication devices such as portable telephones of the recent generations provide a plurality of different functions and options which can be selected and activated by actuating different keys. Usually, text information or icons referring to the different functions and options are shown on a graphical display provided at the portable communication device. Modern displays have a relatively high resolution which offers the possibility to show many information and/or icons at the same time on the display. However, in order to realise a clear arrangement only a few options or functions which can be activated are usually shown at the same time. Other functions which are not shown can only be activated after navigating through different menus. Further, information or options are sometimes shown in lists or two-dimensional arrays and can be only activated by first navigating through these lists or arrays and pressing an enter key afterwards.

In order to provide an easy operation of portable telephones using only a few keys, so-called soft keys are provided, i.e. the functionality of theses keys depends on the state of the phone. Usually, the present functionality is shown by displaying an icon or text information in a separate field on the display, said field being arranged close to the soft key. The user therefore intuitively knows the present function allocated to this soft key. A portable telephone having two soft keys which are arranged under the left and right lower corners of a display is disclosed in the European patent application EP 0 901 262 A2.

The portable telephone disclosed in the patent application mentioned above also comprises a scrolling means or key as a navigation key, said scrolling means being arranged under the middle of the display between the two soft keys. This scrolling means includes a cylindrical roller body which extends partly through an opening in the front cover of the phone. When rolling this roller body, navigation signals are generated which are used for the movement of a cursor in the display in an up/down direction corresponding to the movement of a finger actuating the roller body. Further, the navigation key of the portable telephone disclosed in EP 0 901 262 A2 is provided with a micro switch for detecting a depression of the roller body, thereby providing a selection signal indicating that a item pointed out on the display has been selected. Therefore, this navigation key provides also the function of a third soft key in addition to the two other soft keys being arranged on its left and right side.

While operating the portable telephone disclosed in EP 0 901 262 A2, a user has to actuate different and separated keys in order to select a desired function or option. This may result in a wrong actuation of a key by accident since the finger used for operating the telephone has to be raised and moved to the position of the next key to be actuated.

It is therefore an object of the present invention to provide a portable communication device for a wireless communication system which allows an improved operation.

The above object is achieved by a portable communication device according to claim 1. It comprises a display means for displaying information and a scrolling means for scrolling through a menu or other information displayed on the display means whereby said scrolling means is arranged under the display means. In an editing mode of said communication device a selectable option shown on the display means is activated upon actuation of the scrolling means, e.g. upon depression of the scrolling means. According to the present invention three selectable options are shown on the display means in said editing mode, said options being allocated to three different portions of the scrolling means, namely the left end portion, the middle portion and the right end portion. One of the three selectable options is activated upon actuation of the corresponding part of the scrolling means.

Similar to the portable telephone disclosed in EP 0 901 262 A2, a self-explaining operation of the communication device is achieved since the means for generating the scrolling signals and the soft keys are arranged directly under the display means. Thus, a user intuitively knows the present functionality of the most often used input means. However, according to the present invention only one single input device has to be actuated in order to generate the desired control signals. The user's finger can therefore rest on this single input device, i.e. the scrolling means, allowing a very fast handling of the telephone. Also, since the finger has not to be raised and moved between different keys, the probability of actuating a wrong key by accident decreases. Most preferably, the three selectable options are shown in the lowest line of the display.

The scrolling means may be a scrolling means which can be rotated around its axis for generating scrolling signals in order to scroll through a list of information, such as names in a telephone book or characters shown on the display means. Its middle portion is actuated by pressing it down.

The actuation of the end two portions of the scrolling means may take place in different ways. For example, they might by actuated by depression of the left or right end portion of the scrolling means. Another possibility is that they are actuated by shifting the scrolling means to the left or to the right. In both cases, the finger can rest essentially on the middle portion of the scrolling means. If the end portions have to be actuated by depression the finger can be rolled on the surface of the scrolling means to the left or to the right, if the scrolling means has to be shifted the finger can always rest on the middle portion. Therefore, an improved handling of the input devices is achieved wherein the probability of generation incorrect control signals by actuation the wrong portion is decreased.

The present invention is also useful when pieces of information are displayed in a two-dimensional array. In this case, usually line after line has to be scrolled through to select one of the displayed options resulting in a time-consuming and user-unfriendly procedure. However, while using the portable communication device according to the present invention, in a navigation mode wherein information or options are shown in an two-dimensional array, actuation of the left or right end portion of the scrolling means results in navigation signals which are used for a horizontal movement of a cursor. Therefore, a fast selection of the desired option can be achieved.

In the following description, the present invention is explained in more detail by means of an embodiment relating to the enclosed drawings, in which
Figure 1 shows a schematic top view of a portable communication device of a wireless communication system according to the present invention, namely a portable telephone in an editing mode;
Figure 2 shows a first embodiment of the scrolling means according to the present invention wherein the both end portions of the scrolling means are actuated by depression;
Figure 3 shows a second embodiment of the scrolling means wherein the both end portions are actuated by shifting the scrolling means to the left or to the right;
Figure 4 shows the portable telephone of figure 1 in a navigation mode, wherein actuation of the left or right end portion of the scrolling means results in navigation signals for a cursor;

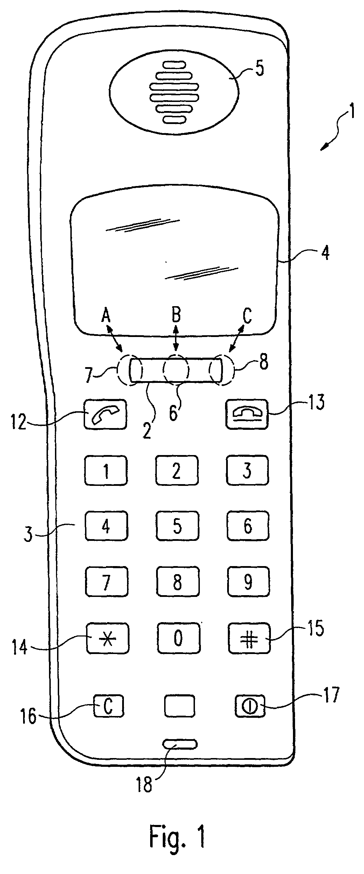

Figure 1 shows a schematic top view of a portable telephone 1 for a wireless telecommunication system as e.g. the GSM or UMTS system. Also the following description solely relates to a portable telephone, the portable communication device for a wireless communication system according to the present invention may also be any other device like a portable laptop computer, a portable palmtop computer or the like comprising functions for communicating data in a wireless communication system. However, the present invention is particularly advantageous for portable communication devices which can be held and operated with a single hand.

The portable telephone 1 shown in figure 1 comprises a display means 4, on which pieces of information like characters, menu items, text information, names or the like can be displayed. It comprises further a loudspeaker 5 on the upper front part and a microphone 18 on the lower front part of the casing. It comprises further the usual 10 alphanumeric keys 3 (numbers 0 to 9), a communication start key 12, a communication end key 13, a pound key 15, a star key 14, a power on/off key 17 and a clear key 16. Finally, the portable telephone 1 comprises on its front side under the middle of the display means 4 a scrolling means or key 2, which is a rotatable key, a part of which is exposed to the outside. The exposed part can be touched by the finger of a user's hand and may be rotated clockwise (upwardly) or counterclockwise (downwardly) to scroll through pieces of information or lists displayed on the display means 4. Preferably, the display means 4 of the portable telephone 1 comprises a graphical display, which has a higher resolution than usual text or character displays.

According to the present invention and shown in figure 1, in an editing mode three different selectable options or functions A, B, C are shown in the lowest line of the display means 4. These three options A to C may be displayed as icons or text information and are allocated to three different areas 6 to 8 of the scrolling means 2 as indicated by the arrows. Therefore, one of the three options A to C displayed in the lowest line can be activated by actuating the corresponding portion of the scrolling means 2. For example, in order to activate the option A displayed on the left side the left end portion 7 of the scrolling means 2 has to be actuated. In order to activate the options displayed in the middle or on the right side the user has to actuate the middle part 6 and the right end portion 8, respectively. Since the scrolling means 2 is arranged directly under the display means 4 and therefore directly under the selectable options A to C, the user intuitively knows the soft key function of the three portions 6-8 of the scrolling means 2.

As already mentioned, the middle portion 6 of the scrolling means 2 is actuated by depressing the scrolling means 2 in its middle. However, an actuation of the left and right end portions 7, 8 of the scrolling means 2 may take place in different ways.

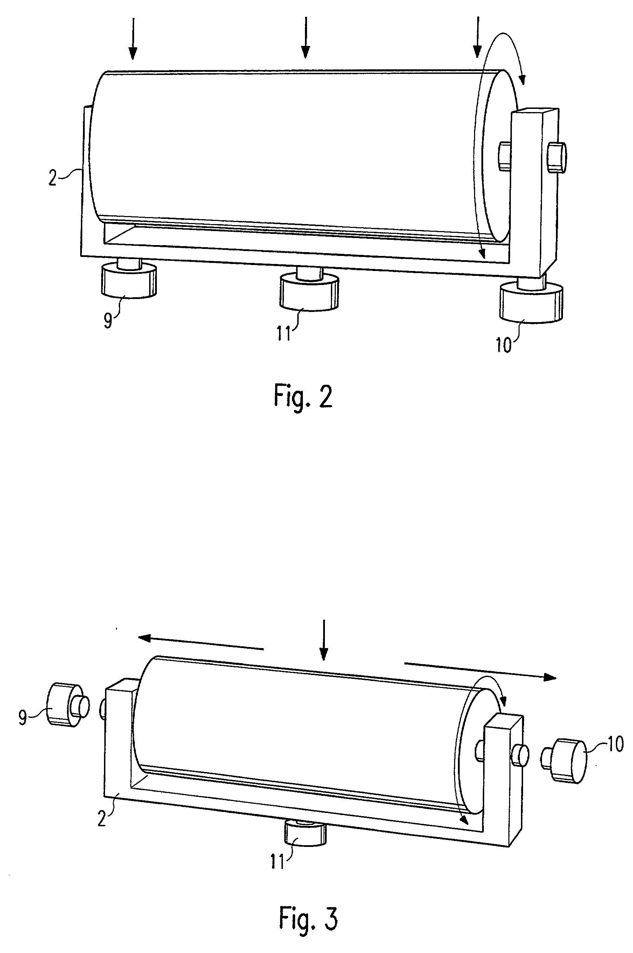

Figure 2 shows a first embodiment of the scrolling means 2 wherein the left and right end portions are also actuated upon pressing down these end portions. In this embodiment, three switches 9 to 11 are arranged under the left end portion, the right end portion and the middle portion, respectively. If one of the two end portions of the scrolling means 2 is depressed in order to activate the option A or C shown on the display means 4, one of the two switches 9 or 10 is activated. On the other hand, if the scrolling means 2 is pressed down in its middle part in order to activate the option B, switch 11 is activated which is recognised by electronic means in order to generate the corresponding control signal for activation of option B.

As can be seen from figure 2, when the middle portion of the scrolling means 2 is depressed, not only switch 11 but also the two switches 9 and 10 are activated. Therefore, it is also possible to use only the switches 9 and 10, which are activated alone when one of the two end portions of the scrolling means 2 is depressed and which activated simultaneously when the middle portion of the scrolling means 2 is depressed. This simultaneous activation of both switches 9 and 10 is be recognised by software or by electronic means and the desired control signal is generated.

In the second embodiment of the present invention which is shown in figure 3, the scrolling means 2 has to be shifted to the left or to the right in order to activate the option A or C. In order to activate option B the scrolling means 2 still has to be depressed in its middle portion. In order to recognise a shifting of the scrolling means 2 both switches 9 and 10 are arranged besides the left or right end portions of the scrolling means 2, respectively. Upon pressing down the scrolling means 2 in its middle portion, only the switch 11 is activated, upon shifting the scrolling means 2 to the left or to the right either the left switch 9 or the right switch 10 is activated.

In both embodiments shown in figures 2 and 3, a finger can rest in principle on the middle portion of the scrolling means 2. In the first embodiment of figure 2, it is sufficient to roll the finger over the surface of the scrolling means 2 into the desired direction in order to activate the switch 9 or 10. In order to activate the switch 9 or 10 in the embodiment shown in figure 3, the scrolling means 2 can be shifted by touching its surface on the middle portion and shifting the cylinder to the left or to the right. This allows a very fast and user-friendly operation of the portable telephone.

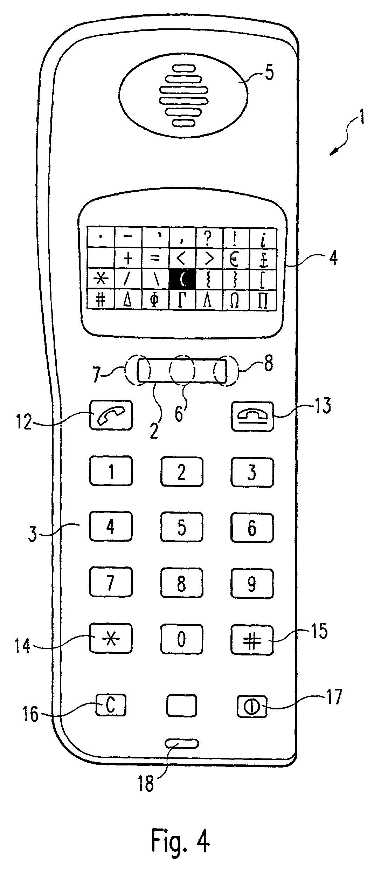

Finally, figure 4 shows the portable telephone 1 in a navigation mode wherein information or options are shown in a two-dimensional array. In this example, an array of different symbols which may be used for entering a SMS message or the like are shown on the display means 4. In the navigation mode only the option which is displayed in inversion or highlighted can be activated by depressing the scrolling means 2 in its middle portion 6. Actuation of the left or right end portion 7, 8 of the scrolling means 2 now results in navigation signals which are used for a horizontal movement of the cursor. In order to move the cursor to the left it is sufficient to actuate the left end portion 7 of the scrolling means 2 while in order to move the cursor to the right the right end portion 8 has to be actuated. A vertical movement of the cursor can be achieved by rotating the scrolling means 2 clockwise (upwardly) or counterclockwise (downwardly), as already known.

Again, a user intuitively knows the different functions which can be achieved upon actuation of the different parts of the scrolling means 2. Further, a very fast movement of a cursor in a two-dimensional array can be achieved. Alternatively, the position of the selectable function can be constant on the display means 4 while the whole two-dimensional array is moved corresponding to the actuation of the scrolling means 2.

The portable communication device according to the present invention therefore provides the opportunity of generating a plurality of different control signals for operating the device by using only a single input device. This allows a very fast navigation through different menus or list and also through two-dimensional arrays shown on the display. Further, due to the soft key functions of the different portions of the scrolling means an easy and intuitive operation of the portable communication device can be achieved.

## Claims

1. Portable communication device (1) for a wireless communication system, with
a display means (4) for displaying information, and
a scrolling means (2) for scrolling through a menu or other information displayed on the display means (4), said scrolling means (2) being arranged under the display means (4),
wherein, in an editing mode of said communication device (1) an option shown on the display means (4) is activated upon actuation of the scrolling means (2),
**characterized in,**
**that** three selectable options (A, B, C) are shown on the display means (4), said options (A, B, C) being allocated to three different portions (6, 7, 8) of the scrolling means (2), and
**that** the shown options (A, B, C) are activated upon actuation of the middle portion (6), the left and right end portion (7, 8) of the scrolling means (2), respectively.

2. Portable communication device according to claim 1,
**characterized in,**
**that** the three selectable options (A, B, C) are shown on the lowest line of said display means (4).

3. Portable communication device according to claim 1 or 2,
**characterized in,**
**that** the middle portion (6) of the scrolling means (2) is actuated upon pressing down the middle portion (6).

4. Portable communication device according to one of the claims 1 to 3,
**characterized in,**
**that** the left and right end portions (7, 8) of the scrolling means (2) are actuated upon pressing down the left or right end portion (7, 8), respectively.

5. Portable communication device according to one of the claims 1 to 3,
**characterized in,**
**that** the left and right end portions (7, 8) of the scrolling means (2) are actuated upon shifting the scrolling means (2) the left or to the right, respectively.

6. Portable communication device according to one of the claims 1 to 5,
**characterized in,**
**that** said scrolling means (2) is a cylindrical scrolling key.

7. Portable communication device according to one of the claims 1 to 6,
**characterized in,**
**that** in an navigation mode wherein information or options are shown in an two-dimensional array actuation of the left or right end portion (7, 8) results in navigation signals which are used for a horizontal movement of a cursor.
